# FASCICULE DE BREVET EUROPEEN

(11) **EP 2 320 554 B1**
(45) Date de publication et mention de la délivrance du brevet: **21.03.2018**
(21) Numéro de dépôt: 10354064.7
(22) Date de dépôt: 14.10.2010
(51) Int. Cl.: H02M 7/493, H02M 7/797, H02J 9/06

(54) **Dispositif convertisseur comprenant au moins cinq niveaux de tension continue et alimentation sans interruption pourvue dudit dispositif**
Mehrpegelumwandler mit zumindest fünf Gleichspannungsniveaus und unterbrechungsfreies Stromversorgungssystem damit
Multi level converter having at least five DC voltage levels and UPS comprising the same

(30) Priorité: 06.11.2009 FR 0905337
(43) Date de publication de la demande: 11.05.2011
(73) Titulaire: MGE UPS Systems, 38330 Montbonnot-Saint-Martin (FR)
(72) Inventeur: Lacarnoy, Alain, 38050 Grenoble Cedex 09 (FR)
(74) Mandataire: Tripodi, Paul

(56) Documents cités:
- US-A- 3 100 851
- GUEDOUANI R ET AL: "Control of capacitor voltage of three phase five-level NPC voltage source inverter. Application to inductor motor drive", ELECTRICAL MACHINES AND POWER ELECTRONICS, 2007. ACEMP '07. INTERNATIONAL AEGEAN CONFERENCE ON, IEEE, PISCATAWAY, NJ, USA, 10 septembre 2007 (2007-09-10), pages 794-799, XP031248071, ISBN: 978-1-4244-0890-0
- CEGLIA G ET AL: "A new multilevel inverter topology", DEVICES, CIRCUITS AND SYSTEMS, 2004. PROCEEDINGS OF THE FIFTH IEEE INT ERNATIONAL CARACAS CONFERENCE ON PUNTA CANA, DOMINICAN REPUBLIC NOVEMBER 3-5,2004, PISCATAWAY, NJ, USA,IEEE LNKD- DOI:10.1109/ICCDCS.2004.1393385, vol. 1, 3 novembre 2004 (2004-11-03), pages 212-218, XP010767754, ISBN: 978-0-7803-8777-5
- RODRIGUEZ J ET AL: "Multilevel Converters: An Enabling Technology for High-Power Applications", PROCEEDINGS OF THE IEEE, IEEE. NEW YORK, US LNKD- DOI:10.1109/JPROC.2009.2030235, vol. 97, no. 11, 1 novembre 2009 (2009-11-01), pages 1786-1817, XP011278598, ISSN: 0018-9219

## Description

### DOMAINE TECHNIQUE DE L'INVENTION

L'invention relève du domaine des dispositifs convertisseurs tels que des redresseurs et des convertisseurs bidirectionnels pouvant fonctionner comme un redresseur (AC/DC) ou comme un onduleur (DC/AC), par exemple ceux utilisés dans les alimentations sans interruption, en particulier dans les alimentations sans interruption de forte puissance, c'est-à-dire dont la puissance est généralement comprise entre environ 10 et 500 kVA.

L'invention concerne plus particulièrement un dispositif convertisseur multi-niveaux pour au moins convertir une tension découpée alternative disponible en un point de tension découpée en au moins cinq niveaux de tension continue disponibles sur des lignes de tension continue, lesdites lignes incluant une ligne de tension de référence et autant de lignes ayant un niveau de tension positive que de lignes ayant un niveau de tension négative.

L'invention concerne également une alimentation sans interruption comprenant une entrée d'alimentation sur laquelle est appliquée une tension d'entrée alternative, un redresseur connecté à ladite entrée, deux lignes de tension sensiblement continue de signes opposés connectées en sortie dudit redresseur, un onduleur connecté aux dites lignes de tension sensiblement continue et comportant une sortie destinée à fournir une tension sécurisée.

### ÉTAT DE LA TECHNIQUE

Les alimentations sans interruption sont couramment développées pour améliorer leur rendement et pour réduire les nuisances sonores engendrées par des fréquences de découpage souvent basses, c'est-à-dire de l'ordre de quelques milliers d'hertz. Dans ce contexte, il a été montré qu'il était intéressant d'utiliser des alimentations sans interruption présentant des topologies sur plusieurs niveaux de tension continue, par exemple sur cinq niveaux.

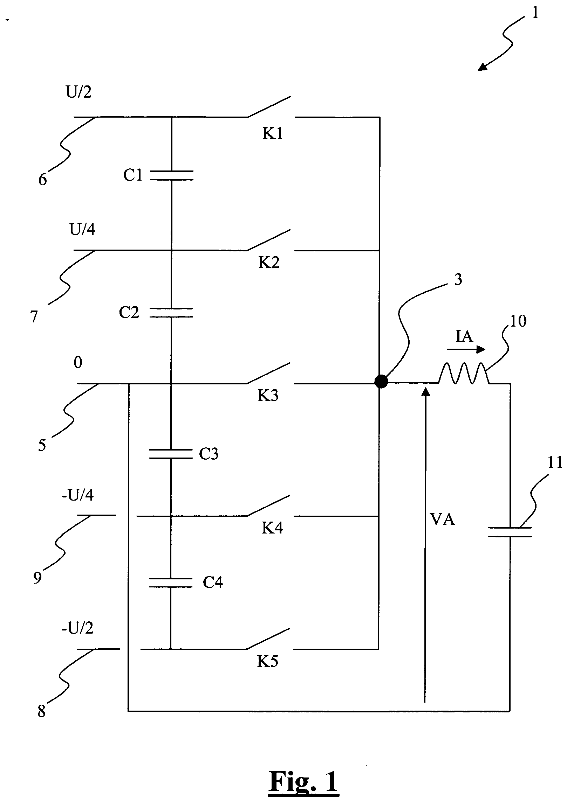

En référence à la figure 1, un dispositif convertisseur 1 à cinq niveaux permet de convertir une tension découpée alternative VA disponible en un point de tension découpée 3 en cinq niveaux de tension continue -U/2, -U/4, REF, U/4, U/2 disponibles sur des lignes de tension continue, lesdites lignes incluant une ligne de tension de référence 5, des lignes 6, 7 ayant des niveaux de tension positifs U/2, U/4, et des lignes 8, 9 ayant des niveaux de tension négatifs -U/2, -U/4. Le terme « découpée » se rapportant à la tension disponible sur le point de tension découpée 3 indique qu'il s'agit de la tension avant filtrage par l'inductance 10 et le condensateur 11. Plus précisément, les lignes de tension positive 6, 7 comportent un niveau de tension extrême U/2 et un niveau de tension intermédiaire U/4. De la même façon, les lignes de tension négative comportent un niveau de tension extrême -U/2 et un niveau de tension intermédiaire -U/4. Le mode de fonctionnement permettant de convertir la tension découpée en tension continue est souvent qualifié de mode redresseur. Le dispositif convertisseur 1 représenté à la figure 1 est bidirectionnel, c'est-à-dire qu'il peut fonctionner en mode onduleur, c'est-à-dire encore qu'il permet également de convertir les cinq niveaux de tension continue -U/2, -U/4, REF, U/4, U/2 en tension découpée VA. Un tel dispositif convertisseur est montré par exemple dans le document Guedouani R. et al. "Control of capacitor voltage of three phase five-level NPC voltage source inverter. Application to inductor motor drive", ACEMP 2007, 10 septembre 2007, XP031248071. Pour permettre une conversion de la tension découpée en cinq niveaux de tension continue, dans un sens ou dans l'autre, le dispositif convertisseur 1 comporte des groupes de commutation K1 à K5 connectés entre les lignes de tension continue 5, 6, 7, 8, 9 et le point de tension découpée 3. Ces groupes de commutations permettent, entre autres, d'obtenir une tension découpée sur le point de tension découpée 3 en faisant commuter les groupes de commutation entre deux niveaux de tensions consécutifs prédéfinis en fonction de la valeur de la tension découpée VA visée. La commande de ces groupes de commutation s'applique aussi bien au mode onduleur et au mode redresseur. La commande des groupes de commutation est généralement réalisée par une technique de modulation de largeur d'impulsion, qualifiée en anglais de « Pulse Width Modulation » en abrégé « PWM », cette technique permettant de générer sur le point de tension découpée 3 des impulsions de tension comprises entre deux niveaux de tensions consécutifs prédéfinis en fonction de la valeur de la tension découpée VA visée. Les impulsions ainsi générées présentent une largeur variable, et une fréquence de découpage, qui est élevée par rapport à la fréquence de la tension alternative qui est généralement sensiblement égale à 50 ou 60 Hertz.

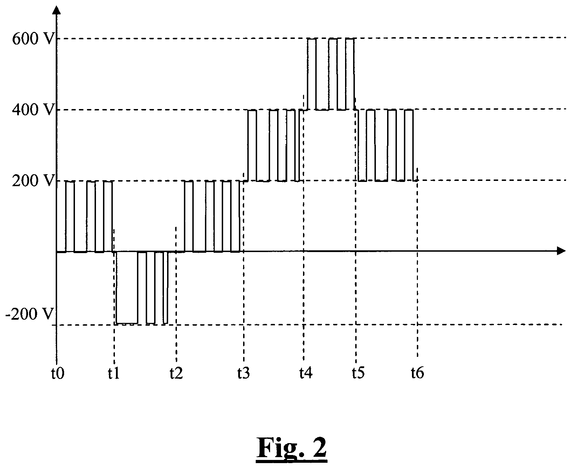

Le fonctionnement du dispositif convertisseur à cinq niveaux représenté à la figure 1 est décrit dans ce qui suit en référence à la figure 2, qui représente l'évolution de la tension aux bornes du groupe de commutation K2. Les niveaux de tension continue extrêmes ont été choisis égaux à 400 Volts, avec une différence de 200 Volts entre chaque ligne 5, 6, 7, 8, 9 de tension continue présentant des niveaux de tension consécutifs.

Entre un temps d'origine t0 et un temps t1 correspondant au début d'une alternance positive de la tension découpée VA, les groupes de commutation K2 et K3 sont commutés de manière complémentaire pour faire varier la valeur de la tension découpée VA entre la tension de référence, en l'occurrence zéro volts, et la tension intermédiaire de 200 Volts. Cette commutation complémentaire des groupes de commutation K2 et K3 est réalisée tant que l'amplitude de l'alternance positive est inférieure à celle de la tension intermédiaire de 200 Volt. Pendant ce temps les autres groupes de commutation K1, K4 et K5 sont maintenus bloqués. On observe donc que la tension aux bornes du groupe de commutation K2 varie entre 0 et 200 Volts.

Entre le temps t1 et un temps t2 correspondant au milieu de l'alternance positive, c'est au tour des groupes de commutation K1 et K2 d'être commutés de manière complémentaire pour faire varier la valeur de la tension découpée VA entre la tension intermédiaire de 200 Volts et la tension extrême de 400 Volts. Cette commutation complémentaire des groupes de commutation K1 et K2 est réalisée tant que l'amplitude de l'alternance positive est comprise entre celle de la tension intermédiaire de 200 Volts et celle de la tension extrême de 400 Volts. Pendant ce temps les autres groupes de commutation K3, K4 et K5 sont maintenus bloqués. On observe donc que la tension aux bornes du groupe de commutation K2 varie entre -200 et 0 Volts.

Entre le temps t2 et un temps t3 correspondant à la fin de l'alternance positive, les groupes de commutation K2 et K3 sont de nouveau commutés de manière complémentaire pour faire varier la valeur de la tension découpée VA entre la tension de référence de zéro volt et la tension intermédiaire de 200 Volts, pendant que les autres groupes de commutation K1, K4 et K5 sont maintenus bloqués. Cette commutation complémentaire des groupes de commutation K2 et K3 est réalisée tant que l'amplitude de l'alternance positive est inférieure à celle de la tension intermédiaire de 200 Volts. On observe donc que la tension aux bornes du groupe de commutation K2 varie entre 0 et 200 Volts.

Entre le temps t3 et un temps t4 correspondant au début d'une alternance négative de la tension découpée VA, les groupes de commutation K3 et K4 sont commutés de manière complémentaire pour faire varier la valeur de la tension découpée VA entre la tension intermédiaire de -200 Volts et la tension de référence de zéro volt. Cette commutation complémentaire des groupes de commutation K3 et K4 est réalisée tant que l'amplitude de l'alternance négative est inférieure à celle de la tension intermédiaire de 200 Volts. Pendant ce temps les autres groupes de commutation K1, K2 et K5 sont maintenus bloqués. On observe donc que la tension aux bornes du groupe de commutation K2 varie entre 200 et 400 Volts.

Entre le temps t4 et un temps t5 correspondant au milieu de l'alternance négative, c'est au tour des groupes de commutation K4 et K5 d'être commutés de manière complémentaire pour faire varier la valeur de la tension découpée VA entre la tension intermédiaire de -200 Volts et la tension extrême de -400 Volts. Cette commutation complémentaire des groupes de commutation K4 et K5 est réalisée tant que l'amplitude de l'alternance négative est comprise entre celle de la tension intermédiaire de -200 Volts et celle de la tension extrême de -400 Volts. Pendant ce temps les autres groupes de commutation K1, K2 et K3 sont maintenus bloqués. On observe donc que la tension aux bornes du groupe de commutation K2 varie entre 400 et 600 Volts.

Entre le temps t5 et un temps t6 correspondant à la fin de l'alternance négative, les groupes de commutation K3 et K4 sont de nouveau commutés de manière complémentaire pour faire varier la valeur de la tension découpée VA entre la tension intermédiaire de -200 Volts et la tension de référence de zéro volt, pendant que les autres groupes de commutation K1, K2 et K5 sont maintenus bloqués. Cette commutation complémentaire des groupes de commutation K3 et K4 est réalisée tant que l'amplitude de l'alternance négative est inférieure à la tension intermédiaire de -200 Volts. On observe donc que la tension aux bornes du groupe de commutation K2 varie entre 200 et 400 Volts.

En définissant la tension de commutation d'un groupe de commutation comme étant la différence de tension aux bornes dudit groupe de commutation entre deux commutations consécutives, on remarque que la tension de commutation du groupe de commutation K2 est sensiblement égale à 200 Volts. Il en est de même pour les autres groupes de commutation.

En ce qui concerne la tension de maintien du groupe de commutation K2, c'est-à-dire la tension aux bornes dudit groupe de commutation K2, on observe celle-ci varie jusqu'à 600 Volts entre les temps t4 et t5. De la même façon, la tension de maintien du groupe de commutation K4 varie également jusqu'à 600 Volts. En ce qui concerne les groupes de commutations K1 et K5, leurs tensions de maintien peuvent, quant à elles, varier jusqu'à 800 Volts.

Les groupes de commutation K1 à K5 sont généralement essentiellement constitués par des interrupteurs statiques capables de supporter les tensions électriques mises en jeu, tel que des transistors à effet de champ. Dans le domaine des alimentations sans interruption, l'amplitude de la tension alternative peut être comprise entre 400 et 480 Volts, ce qui implique l'utilisation de niveaux de tension continue de +/- 450 Volts. Dans cette plage de tensions, deux types d'interrupteurs statiques définis par leur tension de maintien maximum peuvent généralement être utilisés. Le premier type d'interrupteur statique peut supporter une tension de maintien maximum de 600 Volts. Le second type d'interrupteur statique peut supporter une tension de maintien allant jusqu'à 1200 Volts. Le choix du type d'interrupteur statique dépend donc de l'architecture du dispositif convertisseur, et notamment de la tension de maintien maximum de leur groupe de commutation.

Dans le cas du dispositif convertisseur 1 représenté à la figure 1, les groupes de commutation K1, K2, K4 et K5 devront donc être équipés d'interrupteurs statiques du second type, c'est-à-dire des interrupteurs statiques pouvant supporter une tension de maintien allant jusqu'à 1200 Volts.

Cependant, les pertes de puissance pendant les commutations d'interrupteurs statiques pouvant supporter une tension de maintien importante sont généralement beaucoup plus grandes comparativement à un interrupteur statique pouvant supporter une tension de maintien moindre. A titre d'exemple, les pertes d'un interrupteur statique supportant une tension de maintien maximum de 1200 Volts sont sensiblement comprises entre 4 et 5 fois celles d'un interrupteur statique supportant une tension de maintien maximum de 600 Volts. On comprend donc que l'utilisation d'interrupteurs statiques supportant 1200 Volts pour les groupes de commutation K1, K2, K4 et K5 du dispositif convertisseur représenté à la figure 1 constitue un inconvénient. Un autre inconvénient du dispositif convertisseur représenté à la figure 1 est que chaque groupe de commutation K1 à K5 doit être conçus pour permettre de réaliser des commutations à la fréquence des impulsions de largeur modulée, qui est élevé par rapport à fréquence de la tension alternative.

### EXPOSÉ DE L'INVENTION

L'invention vise à apporter une solution aux inconvénients des dispositifs convertisseurs de l'art antérieur en proposant un dispositif convertisseur multi-niveaux pour au moins convertir une tension découpée alternative disponible en un point de tension découpée en au moins cinq niveaux de tension continue disponibles sur des lignes de tension continue, lesdites lignes incluant une ligne de tension de référence et autant de lignes ayant des niveaux de tension positifs que de lignes ayant des niveaux de tension négatifs, ledit dispositif comprenant deux unités de commutation séparées pour convertir des alternances de ladite tension découpée respectivement positive et négative en au moins deux niveaux de tension continue respectivement positif et négatif, lesdites unités de commutation étant connectées à ladite ligne de tension de référence et aux lignes de tension continue présentant respectivement un niveau de tension positif et un niveau de tension négatif, et en ce que chaque unité de commutation comprend un point de découpage connecté au dit point de tension découpée par l'intermédiaire de moyens de permutation, et des groupes de commutation connectés entre lesdites lignes auxquelles ladite unité de commutation est connectée et ledit point de découpage. Chaque unité de commutation comprend :
- une branche de tension maximum connectée entre le point de découpage de ladite unité de commutation et la ligne de tension continue connectée à ladite unité de commutation ayant un niveau de tension extrême, ladite branche de tension maximum étant pourvue d'un premier groupe de commutation,
- au moins une branche de tension intermédiaire connectée entre ledit point de découpage et la au moins une ligne de tension continue connectée à ladite unité de commutation ayant un niveau de tension intermédiaire, ladite au moins une branche de tension intermédiaire étant pourvue d'un second groupe de commutation, et
- une branche de tension minimum connectée entre ledit point de découpage et la ligne de tension de référence, ladite branche de tension de minimum étant pourvue d'un troisième groupe de commutation.

De préférence, le second groupe de commutation est le même sur chaque branche de tension intermédiaire d'une même unité de commutation.

Selon un mode de réalisation, les moyens de permutation comprennent un thyristor disposé entre le point de tension découpée et le point de découpage de chaque unité de commutation, chaque thyristor étant orienté pour faire circuler le courant dans un sens permettant de transférer l'énergie électrique disponible sur ledit point de tension alternatif vers le point de découpage de chaque unité de commutation.

Selon un mode de réalisation, les moyens de permutation comprennent une diode disposée entre le point de tension découpée et le point de découpage de chaque unité de commutation, chaque diode étant orientée pour faire circuler le courant dans un sens permettant de transférer l'énergie électrique disponible sur ledit point de tension alternatif vers le point de découpage de chaque unité de commutation. Avantageusement, les moyens de permutation comprennent, en outre, un transistor orienté pour conduire le courant dans le sens opposé. Les groupes de commutation de chaque branche permettent au moins de transférer l'énergie électrique du point de découpage vers les lignes de tension continue auxquelles lesdites branches sont connectées pour réguler les niveaux de tension sur lesdites lignes. Avantageusement, le second groupe de commutation de chaque branche de tension intermédiaire et de chaque unité de commutation est conçu pour permettre la conduction d'un courant dans au moins une première direction lorsque l'amplitude de la tension sur le point de découpage de ladite unité de commutation est supérieure à l'amplitude de la tension sur la ligne à laquelle ladite branche est connectée, et pour bloquer ledit courant quelque soit l'amplitude de la tension sur le point de découpage. Avantageusement, le second groupe de commutation de chaque branche de tension intermédiaire et de chaque unité de commutation est conçu pour permettre, en outre, la conduction d'un courant dans une direction opposée à la première direction lorsque l'amplitude de la tension sur le point de découpage de ladite unité de commutation est inférieure à l'amplitude de la tension sur la ligne à laquelle ladite branche est connectée.

De préférence, le second groupe de commutation de chaque branche de tension intermédiaire et de chaque unité de commutation comprend :
- un transistor orienté pour permettre la conduction d'un courant dans la première direction lorsque l'amplitude de la tension sur le point de découpage est supérieure à l'amplitude de la tension sur la ligne à laquelle ladite branche est connectée,
- au moins une diode montée en série avec ledit transistor et orientée pour laisser passer un courant circulant dans ladite première direction, et
- une diode montée en parallèle dudit transistor et orientée en inverse par rapport au dit transistor.

De préférence, le second groupe de commutation de chaque branche de tension intermédiaire et de chaque unité de commutation comprend, en outre, un transistor orienté pour permettre la conduction d'un courant dans la direction opposée à la première direction lorsque l'amplitude de la tension sur le point de découpage est inférieure à l'amplitude de la tension sur la ligne à laquelle ladite branche est connectée.

De préférence, le premier groupe de commutation de chaque branche de tension maximum et de chaque unité de commutation comprend au moins une diode orientée pour au moins bloquer le courant dans une seconde direction lorsque l'amplitude de la tension sur le point de découpage de ladite unité de commutation est inférieure à l'amplitude de la tension sur la ligne à laquelle ladite branche est connectée. Avantageusement, le premier groupe de commutation de chaque branche de tension maximum et de chaque unité de commutation comprend, en outre, un transistor orienté pour permettre la conduction d'un courant dans une direction opposée à la seconde direction lorsque l'amplitude de la tension sur le point de découpage est inférieure à l'amplitude de la tension sur la ligne à laquelle ladite branche est connectée.

De préférence, le troisième groupe de commutation de chaque branche de tension minimum et de chaque unité de commutation est conçu pour permettre la conduction d'un courant dans au moins une troisième direction lorsque l'amplitude de la tension sur le point de découpage de ladite unité de commutation est supérieure à l'amplitude de la tension sur la ligne de tension de référence, et pour laisser passer un courant dans une direction opposée à ladite troisième direction, et comprend :
- un transistor orienté pour permettre la conduction d'un courant dans la troisième direction lorsque l'amplitude de la tension sur le point de découpage de ladite unité de commutation est supérieure à l'amplitude de la tension sur la ligne de tension de référence, et
- une diode montée en parallèle dudit transistor et orientée pour laisser passer un courant circulant dans une direction opposée à ladite troisième direction.

L'invention concerne également une alimentation sans interruption comprenant une entrée d'alimentation sur laquelle est appliquée une tension d'entrée alternative, un redresseur connecté à ladite entrée, deux lignes de tension sensiblement continue de signes opposés connectées en sortie dudit redresseur, un onduleur connecté aux dites lignes de tension sensiblement continue et comportant une sortie destinée à fournir une tension sécurisée, caractérisée en ce que ledit onduleur est un dispositif convertisseur tel que décrit précédemment et fournissant à partir des tensions sensiblement continues une tension sécurisée alternative.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente un dispositif convertisseur selon l'art antérieur.
La figure 2 représente les variations dans le temps de la tension aux bornes du groupe de commutation K2 du dispositif convertisseur de la figure 1.
La figure 3 représente un dispositif convertisseur selon l'invention permettant un fonctionnement en mode redresseur seulement.
La figure 4 représente un dispositif convertisseur selon l'invention permettant un fonctionnement en mode redresseur et en mode onduleur.
La figure 5 représente un dispositif convertisseur selon l'invention ayant un nombre de niveaux de tension continue supérieur à cinq.
Les figures 6A à 6E représentent les variations dans le temps en millisecondes des signaux de commande des transistors dans les groupes de commutation du dispositif convertisseur représenté à la figure 4.
Les figures 7A à 7C représentent les variations dans le temps en millisecondes de la tension aux bornes des groupes de commutation du dispositif convertisseur représenté à la figure 4
La figure 8 représente une alimentation sans interruption comportant un dispositif convertisseur selon l'invention.

### DESCRIPTION DETAILLEE D'UN MODE DE RÉALISATION

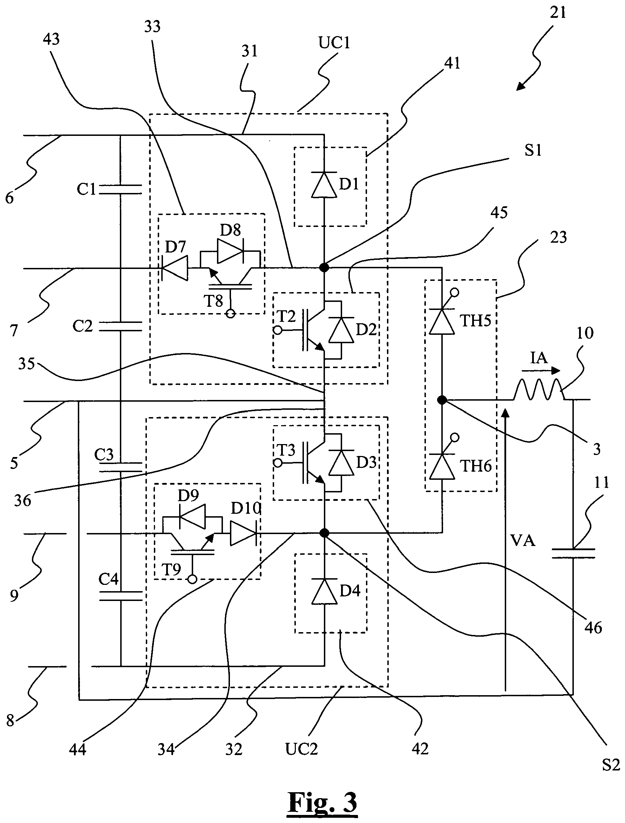

En référence à la figure 3, le dispositif convertisseur 21 permet seulement de fonctionner en mode redresseur. Plus précisément, le dispositif convertisseur 21 permet de convertir une tension découpée alternative VA disponible en un point de tension découpée 3 en au moins cinq niveaux de tension continue -U/2, -U/4, REF, U/4, U/2 disponibles sur les lignes de tension continue 5, 6, 7, 8, 9. Les lignes de tension continue incluent une ligne de tension de référence 5, deux lignes de tension continue 6, 7 ayant des niveaux de tension positifs et deux lignes de tension continues 8, 9 ayant des niveaux de tension négatifs. Le dispositif convertisseur 21 comporte des condensateurs C1-C4 interposés entre chaque ligne de tension continue 5-9. Ces condensateurs permettent d'obtenir un découplage et un équilibrage d'énergie entre les différents niveaux de tension continue, ainsi qu'une réserve d'énergie sur chaque ligne de tension continue. Ces condensateurs C1-C4 permettent également de réaliser un filtrage des impulsions de courant de largeur variable générées par la technique de modulation de largeur d'impulsion.

Comme cela est visible à la figure 3, le dispositif convertisseur 21 comprend deux unités de commutation séparées UC1, UC2 pour convertir des alternances de la tension découpée VA respectivement positive et négative en respectivement trois niveaux de tension continue positifs (0, U/4, U/2) et trois niveaux de tension continue négatifs (0, -U/4, -U/2). L'unité de commutation UC1 pour convertir des alternances positives en trois niveaux de tension continue positifs est connectée à la ligne de tension de référence 5 et aux lignes de tension continue 6, 7 ayant des niveaux de tension positifs. L'unité de commutation UC2 pour convertir des alternances négatives en deux niveaux de tension continue négatifs est connectée à la ligne de tension de référence 5 et aux lignes de tension continue 8, 9 ayant des niveaux de tension négatifs. Dans ce qui suit, on pourra distinguer les unités de commutation UC1, UC2 en mentionnant que l'unité de commutation UC1 est dédiée aux alternances positives et que l'unité de commutation UC2 est dédiée aux alternances négatives.

Comme cela est visible sur la figure 3, chaque unité de commutation comprend un point de découpage S1, S2 connecté au point de tension découpée 3 par l'intermédiaire de moyens de permutation 23. La tension obtenue sur le point de découpage S1, S2 de chaque unité de commutation correspond à celle des alternances auxquelles ladite unité est dédiée. Le terme « découpage » utilisé fait référence à un découpage réalisé par chaque unité de commutation UC1, UC2 pour distribuer l'énergie de l'alternance disponible sur le point de découpage S1, S2 vers les lignes de tension continue 5-9 auxquelles ladite unité de commutation est connectée. Les moyens de permutation 23 permettent de permuter les unités de commutation UC1, UC2 en connectant le point de découpage S1, S2 d'une unité de commutation UC1, UC2 au point de tension découpée 3 en fonction du signe de l'alternance de la tension découpée VA. Les moyens de permutation permettent ainsi de connecter le point de tension découpée 3 au point de découpage S1 pendant les alternances positives de la tension découpée VA et au point de découpage S2 pendant les alternances négatives de ladite tension découpée VA. Par rapport au dispositif convertisseur 1 selon l'art antérieur, les moyens de permutation 23 constituent un groupe de commutation fonctionnant avec une fréquence de commutation moindre par rapport à la fréquence des impulsions de largeur modulée, ce qui permet de limiter les pertes énergétiques. Par ailleurs, chaque permutation est réalisée au moment ou la valeur de la tension découpée VA passe par zéro volt ce qui permet d'adoucir lesdites commutations.

Dans le mode de réalisation représenté à la figure 3, les moyens de permutation 23 comprennent deux thyristors TH5, TH6 disposés entre le point de tension découpée 3 et le point de découpage S1, S2 de chaque unité de commutation UC1, UC2, chaque thyristor étant orienté pour faire circuler le courant dans un sens permettant de transférer l'énergie électrique disponible sur ledit point de tension alternatif vers le point de découpage de chaque unité de commutation. Dans d'autres modes de réalisation, ces thyristors TH5, TH6 auraient pu être remplacés par des diodes orientées de la même façon. L'intérêt d'utiliser des thyristors plutôt que des diodes est essentiellement de permettre une charge préalable des lignes de tension continue sans avoir à utiliser un système dédié à cette charge préalable utilisant des contacteurs et des résistances. Ceci est particulièrement avantageux lorsque le dispositif convertisseur 21 est destiné à être utilisé dans une alimentation sans interruption.

Comme cela est visible sur la figure 3, chaque unité de commutation UC1, UC2 comprend des groupes de commutation connectés entre les lignes de tension continue auxquelles ladite unité de commutation est connectée et le point de découpage S1, S2 de ladite unité de commutation.

Plus précisément, chaque unité de commutation comprend une branche de tension maximum 31, 32 connectée entre le point de découpage S1, S2 de ladite unité de commutation et la ligne de tension continue 6, 8 ayant un niveau de tension extrême, une branche de tension intermédiaire 33, 34 connectée entre ledit point de découpage S1, S2 et la ligne de tension continue 7, 9 ayant un niveau de tension intermédiaire, et une branche de tension minimum 35, 36 connectée entre ledit point de découpage S1, S2 et la ligne de tension de référence 5. La branche de tension maximum 31, 32 est pourvue d'un premier groupe de commutation 41, 42. La branche de tension intermédiaire 33, 34 est pourvue d'un second groupe de commutation 43, 44. La branche de tension de minimum 35, 36 est pourvue d'un troisième groupe de commutation 45, 46. Les groupes de commutation 41-46 permettent de transférer l'énergie électrique du point de découpage S1, S2 vers les lignes de tension continue 5, 6, 7, 8, 9 auxquelles lesdites branches 31-36 sont connectées pour réguler les niveaux de tension sur lesdites lignes. Comme cela est illustré ci-après, cette architecture a l'avantage de réduire la tension de maintien des groupes de commutation utilisés.

Dans le mode de réalisation représenté à la figure 3, le second groupe de commutation 43, 44 de chaque branche de tension intermédiaire 33, 34 et de chaque unité de commutation UC1, UC2 comporte :
- un transistor T8, T9 orienté pour permettre la conduction d'un courant dans au moins une première direction lorsque l'amplitude de la tension sur le point de découpage S1, S2 est supérieure à l'amplitude de la tension sur la ligne 7, 9 à laquelle ladite branche est connectée,
- une diode D7, D10 montée en série avec ledit transistor et orientée pour laisser passer un courant circulant dans ladite première direction, et
- une diode D8, D9 montée en parallèle dudit transistor et orientée en inverse par rapport au dit transistor..

Dans le mode de réalisation représenté à la figure 3, le premier groupe de commutation 41, 42 de chaque branche de tension maximum 31, 32 et de chaque unité de commutation UC1, UC2 comprend une diode D1, D4 orientée pour bloquer le courant dans une seconde direction lorsque l'amplitude de la tension sur le point de découpage S1, S2 de ladite unité de commutation est inférieure à l'amplitude de la tension sur la ligne 6, 8 à laquelle ladite branche est connectée.

Dans le mode de réalisation représenté à la figure 3, le troisième groupe de commutation 45, 46 de chaque branche de tension minimum 35, 36 et de chaque unité de commutation UC1, UC2 comprend :
- un transistor T2, T3 orienté pour permettre la conduction d'un courant dans une troisième direction lorsque l'amplitude de la tension sur le point de découpage S1, S2 de ladite unité de commutation est supérieure à l'amplitude de la tension sur la ligne de tension de référence 5, et
- une diode D2, D3 montée en parallèle dudit transistor et orientée pour laisser passer un courant circulant dans une direction opposée à ladite troisième direction

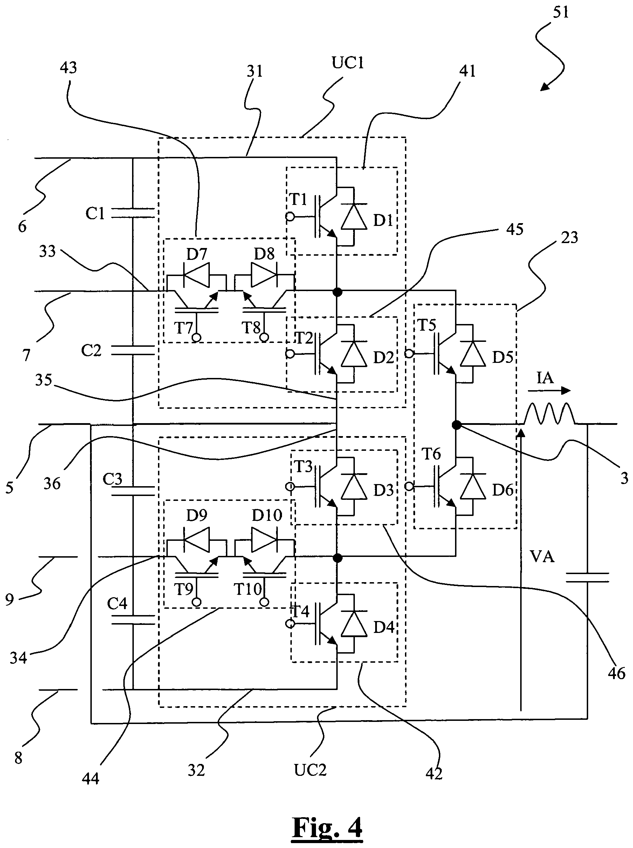

En référence à la figure 4, le dispositif convertisseur 51 permet fonctionner en mode redresseur et en mode onduleur, c'est-à-dire qu'il permet, en outre, de convertir les cinq niveaux de tension continue -U/2, -U/4, REF, U/4, U/2 disponibles sur les lignes de tension continue 5, 6, 7, 8, 9 en une tension découpée VA disponible sur le point de tension découpée 3. Le dispositif convertisseur 51 comporte la plupart des éléments décrit précédemment en référence à la figure 3, et ces éléments sont référencés de la même façon.

Dans le mode de réalisation représenté à la figure 4, les moyens de permutation 53 comprennent une diode D5, D6 disposée entre le point de tension découpée 3 et le point de découpage S1, S2 de chaque unité de commutation, chaque diode étant orientée pour faire circuler le courant dans un sens permettant de transférer l'énergie électrique disponible sur ledit point de tension alternatif vers le point de découpage S1, S2 de chaque unité de commutation UC1, UC2. Les moyens de permutation 53 comprennent, en outre, un transistor T5, T6 orienté pour conduire le courant dans le sens opposé.

Les unités de commutation UC1, UC2 du dispositif convertisseur 51 représentées à la figure 4 comportent, comme dans le mode de réalisation de la figure 3, des branches de tension maximum, 31, 32, des branches de tension intermédiaire 33, 34 et des branches de tension minimum 35, 36. Les groupes de commutation du dispositif convertisseur 51 ont été référencés de la même façon que ceux du dispositif convertisseur de la figure 3, bien qu'ils comportent des composants additionnels permettant un fonctionnement en mode onduleur.

Dans le mode de réalisation représenté à la figure 4, le second groupe de commutation 43, 44 de chaque branche de tension intermédiaire 33, 34 et de chaque unité de commutation UC1, UC2 comprend,
- un transistor T8, T9 orienté pour permettre la conduction d'un courant dans une première direction lorsque l'amplitude de la tension sur le point de découpage S1, S2 est supérieure à l'amplitude de la tension sur la ligne 7, 9 à laquelle ladite branche est connectée,
- une diode D7, D10 montée en série avec ledit transistor et orientée pour laisser passer un courant circulant dans ladite première direction,
- une diode D8, D9 montée en parallèle dudit transistor et orientée en inverse par rapport au dit transistor, et
- un transistor T7, T10 orienté pour permettre la conduction d'un courant dans la direction opposée à ladite première direction lorsque l'amplitude de la tension sur le point de découpage S1, S2 est inférieure à l'amplitude de la tension sur la ligne de tension continue 7, 9 à laquelle ladite branche est connectée.

Dans le mode de réalisation représenté à la figure 4, le premier groupe de commutation 41, 42 de chaque branche de tension maximum 31, 32 et de chaque unité de commutation UC1, UC2 comprend :
- une diode D1, D4 orientée pour au moins bloquer le courant dans une seconde direction lorsque l'amplitude de la tension sur le point de découpage S1, S2 de ladite unité de commutation est inférieure à l'amplitude de la tension sur la ligne 6, 8 à laquelle ladite branche est connectée, et
- un transistor T1, T4 orienté pour permettre la conduction d'un courant dans une direction opposée à ladite seconde direction lorsque l'amplitude de la tension sur ledit point de découpage est inférieure à l'amplitude de la tension sur la ligne 6, 8 à laquelle ladite branche est connectée.

Dans le mode de réalisation représenté à la figure 4, le troisième groupe de commutation 45, 46 de chaque branche de tension minimum 35, 36 et de chaque unité de commutation UC1, UC2 comprend :
- un transistor T2, T3 orienté pour permettre la conduction d'un courant dans au moins une troisième direction lorsque l'amplitude de la tension sur le point de découpage S1, S2 de ladite unité de commutation est supérieure à l'amplitude de la tension sur la ligne de tension de référence 5,
- une diode D2, D3 montée en parallèle dudit transistor et orientée en inverse par rapport au dit transistor, et

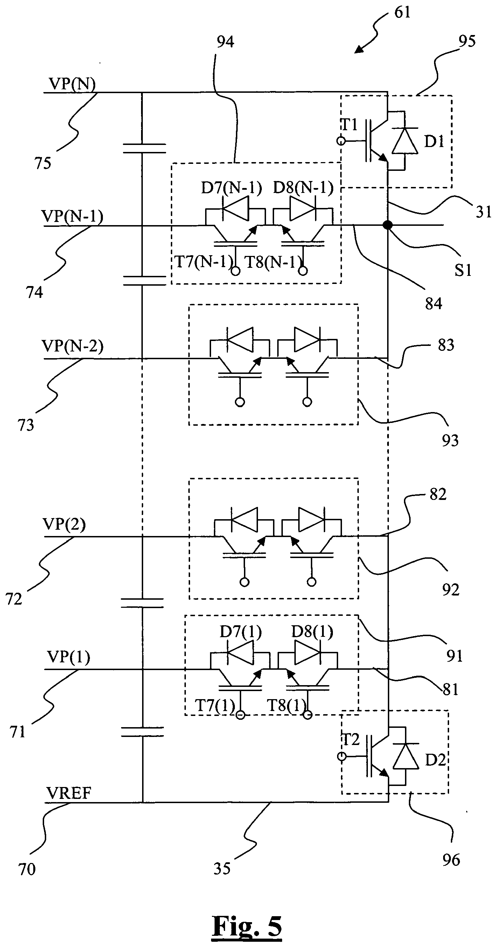

En référence à la figure 5, le dispositif convertisseur, pour lequel seulement l'unité de commutation 61 dédiée aux alternances positive a été représentée, permet fonctionner en mode redresseur et en mode onduleur, pour convertir, dans un sens et dans l'autre, 2N+1 niveaux de tension continue VREF, VP(1)-VP(N) disponibles sur autant de lignes de tension continue 70, 71, 72, 73, 74, 75 en une tension découpée VA disponible sur le point de tension découpée. Le dispositif convertisseur 61 comporte la plupart des éléments décrit précédemment en référence à la figure 4, et ces éléments sont référencés de la même façon.

L'unité de commutation 61 dédiée à l'alternance positive représentée à la figure 5 comporte, comme dans le mode de réalisation de la figure 4, une branche de tension maximum 31 et une branche de tension minimum 35. L'unité de commutation 61 comporte, en outre, un nombre N-1 branches de tension intermédiaire 81, 82, 83, 84 connectées entre le point de découpage S1 de ladite unité de commutation et les lignes de tension 71, 72, 73, 74 ayant un niveau de tension intermédiaire VP(1)-VP(N-1).

En ce qui concerne l'unité de commutation dédiée aux alternances négatives, elle comporte également, comme dans le mode de réalisation de la figure 4, une branche de tension extrême et une branche de tension minimum. L'unité de commutation dédiée aux alternances négatives comporte également un nombre N-1 de branches de tension intermédiaire connectées entre le point de découpage S2 de ladite unité de commutation et les lignes de tension ayant des niveaux de tension intermédiaires.

Chaque branche de tension intermédiaire 81, 82, 83, 84 de l'unité de commutation 61 comporte, comme dans le mode de réalisation de la figure 4, au moins un second groupe de commutation 91, 92, 93, 94. En l'occurrence, les N-1 groupes de commutation 91, 92, 93, 94 sont sensiblement identiques au second groupe de commutation 33 du dispositif convertisseur 51 de la figure 4. De la même façon, la branche de tension extrême 31 et la branche de tension minimum 35 de l'unité de commutation 61 comporte, comme dans le mode de réalisation de la figure 4, respectivement un premier et un troisième groupe de commutation 95, 96 sensiblement identiques à respectivement le premier de commutation 41 et le troisième groupe de commutation 45 du dispositif convertisseur 51 de la figure 4.

En ce qui concerne l'unité de commutation dédiée aux alternances négatives, elle comporte également, comme dans le mode de réalisation de la figure 4, un premier groupe de commutation et un troisième groupe de commutation sensiblement les mêmes que les premier et troisième groupe de commutation 42, 46 du dispositif 51 représenté à la figure 4. L'unité de commutation dédiée aux alternances négatives comporte également un nombre N-1 de seconds groupes de commutation qui sont sensiblement les mêmes que le second groupe de commutation 44 du dispositif 51 représenté à la figure 4.

Plus précisément, la première branche de tension intermédiaire 81 connectée à la ligne de tension continue 71 ayant un premier niveau de tension intermédiaire VP(1) comporte :
- un transistor T8(1), T9(1) orienté pour permettre la conduction d'un courant dans une première direction lorsque l'amplitude de la tension sur le point de découpage S1, S2 est supérieure à l'amplitude de la tension sur la ligne à laquelle ladite branche est connectée,
- une diode D7(1), D10(1) montée en série avec ledit transistor et orientée pour laisser passer un courant circulant dans ladite première direction,
- une diode D8(1), D9(1) montée en parallèle dudit transistor et orientée en inverse par rapport au dit transistor, et
- un transistor T7(1), T10(1) orienté pour permettre la conduction d'un courant dans la direction opposée à ladite première direction lorsque l'amplitude de la tension sur le point de découpage S1, S2 est inférieure à l'amplitude de la tension sur la ligne de tension continue à laquelle ladite branche est connectée.

De la même façon, les dernières branches de tension intermédiaires 84 connectées à la ligne de tension continue 74 ayant un dernier niveau de tension intermédiaire VP(N-1 comportent :
- un transistor T8(N-1), T9(N-1) orienté pour permettre la conduction d'un courant dans une première direction lorsque l'amplitude de la tension sur le point de découpage S1, S2 est supérieure à l'amplitude de la tension sur la ligne à laquelle ladite branche est connectée,
- une diode D7(N-1), D10(N-1) montée en série avec ledit transistor et orientée pour laisser passer un courant circulant dans ladite première direction,
- une diode D8(N-1), D9(N-1) montée en parallèle dudit transistor et orientée en inverse par rapport au dit transistor, et
- un transistor T7(N-1), T10(N-1) orienté pour permettre la conduction d'un courant dans la direction opposée à ladite première direction lorsque l'amplitude de la tension sur le point de découpage S1, S2 est inférieure à l'amplitude de la tension sur la ligne de tension continue à laquelle ladite branche est connectée.

La multiplication du nombre de niveaux sur le dispositif convertisseur permet de minimiser les dispositifs de filtrage associés notamment l'inductance.

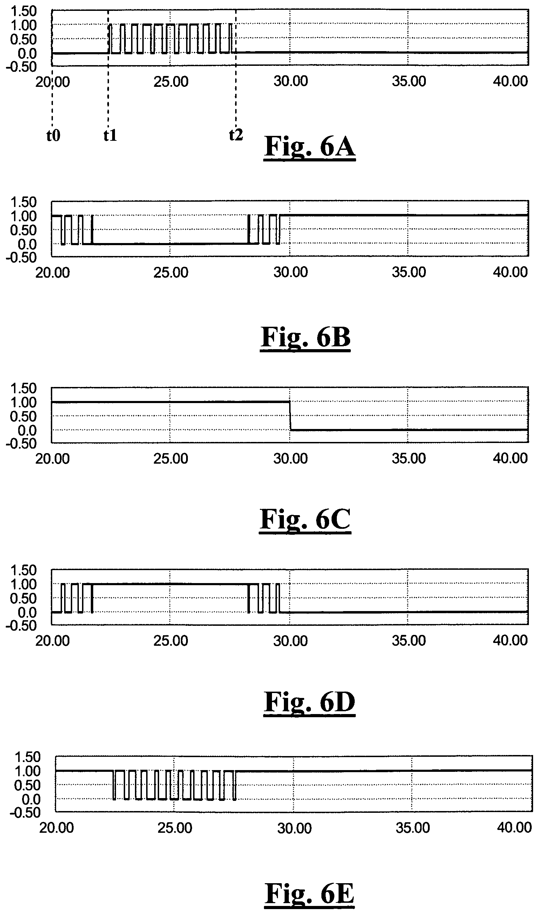

En référence aux figures 6A à 6E, la commande de l'unité de commutation UC1 dédiée aux alternances positives de la tension découpée VA des dispositifs convertisseurs représentés sur les figures 3 ou 4 est décrite ci-après. La commande de l'unité de commutation UC2 dédiée aux alternances négatives de la tension découpée VA de ces dispositifs convertisseurs a également été décrite parallèlement.

Les figures 6A, 6B, 6C, 6D et 6E représentent les variations dans le temps des signaux de commandes des transistors de l'unité de commutation UC1 respectivement référencés T1, T2, T5, T7, T8. Lorsque le signal représenté est à un niveau 1, le transistor commandé par ledit signal conduit ou est passant. Inversement, lorsque le signal représenté est à un niveau zéro, le transistor commandé par ledit signal ne conduit plus ou est bloqué.

Comme cela est visible sur la figure 6C, pendant les alternances positives de la tension découpée VA, le transistor T5 est passant. Inversement, pendant les alternances négatives de la tension découpée VA, le transistor T5 est bloqué. La commande des transistors T5, T6 des moyens de permutation 53 est complémentaire. De cette façon, la commutation des transistors T5, T6 des moyens de permutation est réalisée à basse fréquence, en l'occurrence deux fois la fréquence de la tension découpée VA, ce qui permet de minimiser les pertes de puissance liées à la commutation. De surcroît, la commutation des transistors T5, T6 est réalisée avec des tensions de commutation sensiblement égales à zéros, ce qui permet de réduire encore plus ces pertes de commutation.

Dans un premier temps t0, pour obtenir un début de l'alternance de la tension découpée VA jusqu'à une tension ayant une amplitude sensiblement égale à l'amplitude ou la valeur absolue du niveau de tension intermédiaire U/4, -U/4, on fait varier la tension sur le point de découpage S1, S2 entre le niveau de tension de référence qui est présumé sensiblement égal à zéro Volts et le niveau de tension intermédiaire U/4, -U/4. Pour cela on réalise des commutations successives en utilisant simultanément le troisième et le second groupe de commutation 45, 46, 43, 44 disposés sur respectivement la branche de tension minimum 35, 36 et la branche de tension intermédiaire 33, 34. Comme cela est visible sur les figures 6B et 6D, ces commutations successives sont réalisées en utilisant la paire de transistors T2 et T7 pour les alternances positives. De la même façon, on utilise la paire de transistors T3 et T10 pour le début des alternances négatives. En même temps, le transistor T8 (figure 6E) est maintenu passant pour permettre un fonctionnement lorsque la tension découpée VA et le courant alternatif IA sont de signes opposés. De la même façon, le transistor T9 est maintenu passant pour le début des alternances négatives. Plus précisément, pour obtenir une tension de référence sur la sortie de découpage S1, respectivement S2, on fait conduire le transistor T2, respectivement T3, et on bloque le transistor T7, respectivement T10. Inversement, pour obtenir une tension intermédiaire sur la sortie de découpage S1, respectivement S2, on fait conduire le transistor T7, respectivement T10, et on bloque le transistor T2, respectivement T3. La commande des deux transistors de chacune des paires de transistors est complémentaire.

Dans un second temps t1, pour obtenir une partie de l'alternance de la tension découpée VA ayant une amplitude variant entre l'amplitude ou la valeur absolue du niveau de tension intermédiaire et l'amplitude ou la valeur absolu du niveau maximum, on fait varier la tension sur le point de découpage S1, S2 entre le niveau de tension de intermédiaire U/4, -U/4 et le niveau de tension extrême U/2, - U/2. Pour cela on réalise des commutations successives en utilisant simultanément le second et le premier groupe de commutation 43, 44, 41, 42 disposés sur respectivement la branche de tension intermédiaire 33, 34 et la branche de tension extrême 31, 32. En l'occurrence, ces commutations successives sont réalisées en utilisant la paires de transistors T1 et T8 pour les alternances positives (figures 6A et 6E), et la paire de transistors T4 et T9 pour les alternances négatives. En même temps, le transistor T7 pour les alternances positives et le transistor T10 pour les alternances négatives sont maintenus passants pour permettre un fonctionnement lorsque la tension découpée VA et le courant alternatif IA sont de signes opposés (figure 6D). Plus précisément, pour obtenir une tension intermédiaire sur la sortie de découpage S1, respectivement S2, on fait conduire le transistor T8, respectivement T9, et on bloque le transistor T1, respectivement T8. Inversement, pour obtenir une tension extrême sur la sortie de découpage S1, respectivement S2, on fait conduire le transistor T1, respectivement T8, et on bloque le transistor T8, respectivement T9. La commande des deux transistors de chacune des paires de transistors est donc complémentaire.

Dans un troisième temps t2, pour obtenir une fin de l'alternance de la tension découpée VA ayant une amplitude variant entre l'amplitude ou la valeur absolue du niveau de tension intermédiaire jusqu'à la tension de référence, on fait varier la tension sur le point de découpage S1, S2 entre le niveau de tension de référence et le niveau de tension intermédiaire U/4, -U/4. Pour cela on réalise des commutations successives en utilisant simultanément le troisième et le second groupe de commutation 45, 46, 43, 44 disposés sur respectivement la branche de tension minimum 35, 36 et la branche de tension intermédiaire 33, 34, c'est-à-dire de la même façon qu'entre les temps t0 et t1 (figures 6B et 6D).

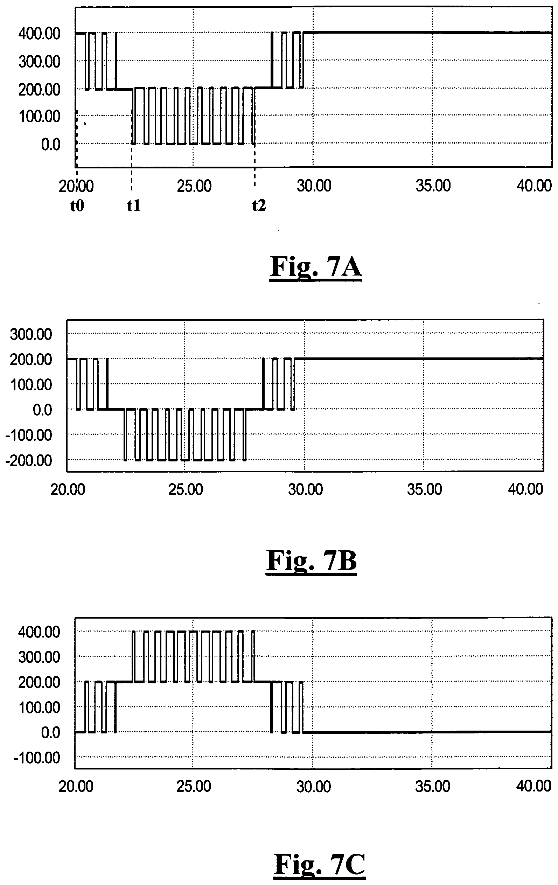

En référence aux figures 7A à 7C, les variations dans le temps des tensions aux bornes du premier, du second et du troisième groupe de commutation ont été représentés. Les niveaux de tension continue extrêmes ont été choisis égaux à - 400 et 400 Volts avec une différence de 200 Volts entre chaque ligne de tension continue présentant des niveaux de tension consécutifs.

On constate que la tension de commutation aux bornes de chacun de ces groupes de commutation, et donc des composants électroniques qui le composent, est sensiblement égale à 200 Volts. En ce qui concerne la tension de maintien, elle n'est jamais supérieure à 400 volts. Ainsi, il est possible d'utiliser des composants électroniques pouvant supporter une tension de maintien plus faible par rapport aux dispositifs convertisseurs de l'art antérieur, par exemple des composants pouvant supporter une tension de maintien allant jusqu'à 600 Volts. Les pertes de puissance s'en trouvent donc minimisées.

La commande du dispositif convertisseur comportant 2N+1 niveaux de tension continue représenté à la figure 5, est réalisée de manière comparable en ce qui concerne les débuts et les fins d'alternances. Plus précisément, la commande pour obtenir un début ou une fin d'alternance ayant une amplitude comprise entre la tension de référence et une tension égale à la valeur absolue du premier niveau de tension intermédiaire est réalisé en faisant varier la tension sur le point de découpage S1, S2 entre le niveau de tension de référence et ledit premier niveau de tension intermédiaire. Pour cela on réalise des commutations successives en utilisant simultanément le troisième groupe de commutation 96 et le second groupe de commutation 91 disposés sur respectivement la branche de tension minimum 35 et la première branche de tension intermédiaire 81. La commande du dispositif convertisseur à plusieurs niveaux est donc réalisée, pour ce qui concerne le début et la fin d'alternance, de la même façon que la commande des dispositifs convertisseurs des figures 3 et 4 décrite précédemment en remplaçant le transistors T7 de l'unité de commutation des figures 3 ou 4 par le transistor T7(1) de l'unité de commutation 61 de la figure 6.

Dans le cas d'un dispositif convertisseur à 2N+1 niveaux représenté à la figure 5, la commande pour obtenir un sommet d'alternance ayant une amplitude comprise entre une tension égale à l'amplitude ou la valeur absolue du dernier niveau de tension intermédiaire et une tension extrême est réalisée en faisant varier la tension sur le point de découpage S1, S2 entre ledit niveau de tension de extrême et ledit dernier niveau de tension intermédiaire. Pour cela on réalise des commutations successives en utilisant simultanément le second et le premier groupe de commutation disposés respectivement sur la dernière branche de tension intermédiaire et sur la branche de tension extrême. La commande du dispositif convertisseur à plusieurs niveaux est donc réalisée, pour ce qui concerne le sommet d'alternance, de la même façon que la commande du dispositif de la figure 3 à partir du temps t1 décrite précédemment en remplaçant le transistors T7 de l'unité de commutation des figures 3 ou 4 par le transistor T7(N) de l'unité de commutation 61 de la figure 6.

Dans le cas d'un dispositif convertisseur à plusieurs niveaux représenté à la figure 5, la commande pour obtenir une partie d'alternance ayant une amplitude comprise entre une tension égale à la valeur absolue d'un niveau de tension intermédiaire de rang I et celle d'un niveau de tension intermédiaire consécutif de rang I+1 est réalisé en faisant varier la tension sur le point de découpage S1, S2 entre ledit niveau de tension intermédiaire et ledit niveau de tension intermédiaire consécutif. Pour cela on réalise des commutations successives en utilisant simultanément les seconds groupes de commutation disposés respectivement sur la branche de la tension intermédiaire et sur la branche de tension intermédiaire consécutive.

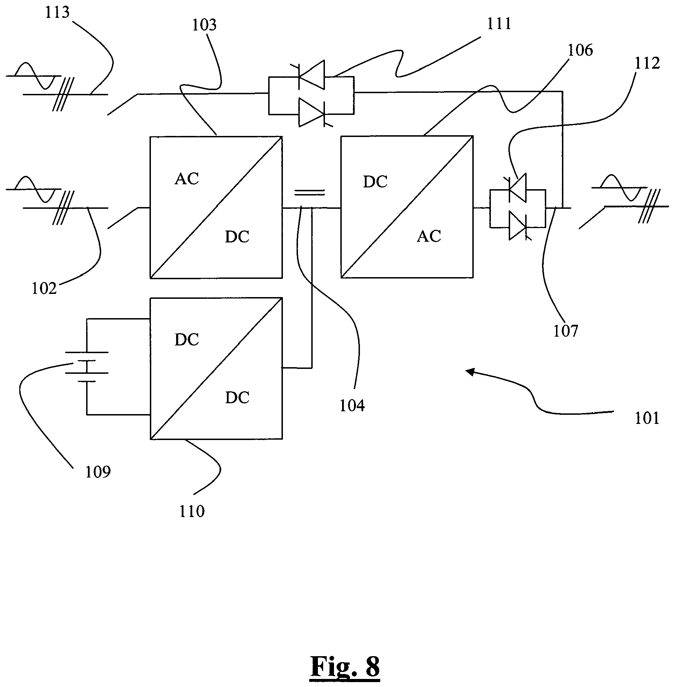

Les dispositifs convertisseurs décrits précédemment peuvent être utilisés dans une alimentation sans interruption 101 telle que celle représentée à la figure 8. Cette alimentation sans interruption comprend une entrée d'alimentation 102 sur laquelle est appliquée une tension d'entrée variable d'un premier réseau triphasé. L'alimentation sans interruption comprend un redresseur 103, ledit redresseur étant connecté entre, d'un côté, l'entrée d'alimentation 102 et, de l'autre côté, deux lignes de sortie 104 ou bus de tension sensiblement continue. L'alimentation sans interruption comprend un onduleur 106 connecté entre les lignes de sortie 104 et une sortie 107 destiné à fournir une tension alternative triphasée sécurisée à une charge 108. Le bus de tension continue 104 est également connecté à une batterie 109 par l'entremise d'un convertisseur DC/DC 110.

Dans l'alimentation dans interruption 101 représentée à la figure 8, le redresseur pourrait être un dispositif convertisseur tel que celui représenté à la figure 3. De la même façon, l'onduleur 106 pourrait être un dispositif convertisseur tel que celui représenté à la figure 4.

Comme cela est visible sur la figure 8, des contacteurs statiques 111 et 112 permettent de sélectionner entre l'entrée d'alimentation 102 du premier réseau triphasé et une entrée d'alimentation 113 d'un second réseau également triphasé. Ainsi, il est possible d'alimenter la charge par l'intermédiaire du premier réseau sécurisé par l'alimentation sans interruption 101, et le cas échéant commuter sur le second réseau.

## Revendications

1. Dispositif convertisseur multi-niveaux pour au moins convertir une tension découpée alternative (VA) disponible en un point de tension découpée (3) en au moins cinq niveaux de tension continue (-U/2, -U/4, REF, U/4, U/2) disponibles sur des lignes de tension continue, lesdites lignes incluant une ligne de tension de référence (5 ; 70) et autant de lignes (6, 7 ; 71-75) ayant des niveaux de tension positifs que de lignes ayant des niveaux de tension négatifs (8, 9),
ledit dispositif comprend deux unités de commutation (UC1, UC2 ; 61) séparées pour convertir des alternances de ladite tension découpée respectivement positive et négative en au moins deux niveaux de tension continue respectivement positif et négatif, lesdites unités de commutation étant connectées à ladite ligne de tension de référence (5 ; 70) et aux lignes de tension continue (6-9 ; 71-75) présentant respectivement un niveau de tension positif et un niveau de tension négatif, et
**caractérisé en ce que** chaque unité de commutation comprend un point de découpage (S1, S2) connecté au dit point de tension découpée (3) par l'intermédiaire de moyens de permutation (23), et des groupes de commutation (41-48 ; 91-96) connectés entre lesdites lignes auxquelles ladite unité de commutation est connectée et ledit point de découpage,
chaque unité de commutation (UC1, UC2) comprend :
- une branche de tension maximum (31, 32) connectée directement entre le point de découpage (S1, S2) de ladite unité de commutation et la ligne de tension continue (6, 8 ; 75) connectée à ladite unité de commutation ayant un niveau de tension extrême, ladite branche de tension maximum étant pourvue d'un premier groupe de commutation (41, 42 ; 95),
- au moins une branche de tension intermédiaire (33, 34 ; 91-94) connectée directement entre ledit point de découpage (S1, S2) et la au moins une ligne de tension continue (7, 9 ; 71-74) connectée à ladite unité de commutation ayant un niveau de tension intermédiaire, ladite au moins une branche de tension intermédiaire étant pourvue d'un second groupe de commutation (43, 44 ; 91-94), et
- une branche de tension minimum (35, 36) connectée directement entre ledit point de découpage (S1, S2) et la ligne de tension de référence (5, 70), ladite branche de tension de minimum étant pourvue d'un troisième groupe de commutation (45, 46 ; 96),
lesdits groupes de commutation (41-46 ; 91-96) de chaque branche (31-36 ; 31, 35, 81-84) permettent au moins de transférer l'énergie électrique du point de découpage (S1, S2) vers les lignes de tension continue (5-9; 70-75) auxquelles lesdites branches sont connectées pour réguler les niveaux de tension sur lesdites lignes, et
ledit second groupe de commutation (43, 44 ; 91-94) de chaque branche de tension intermédiaire (33, 34; 81, 84) et de chaque unité de commutation (UC1, UC2 ; 61) est conçu pour permettre la conduction d'un courant dans au moins une première direction lorsque l'amplitude de la tension sur le point de découpage (S1, S2) de ladite unité de commutation est supérieure à l'amplitude de la tension sur la ligne à laquelle ladite branche est connectée, et pour bloquer ledit courant quelque soit l'amplitude de la tension sur le point de découpage.

2. Dispositif selon la revendication 1, **caractérisé en ce que** le second groupe de commutation (33, 34 ; 81-84) est le même sur chaque branche de tension intermédiaire d'une même unité de commutation (UC1, UC2 ; 61).

3. Dispositif selon l'une des revendications 1 ou 2, **caractérisé en ce que** les moyens de permutation (23) comprennent un thyristor (TH5, TH6) disposé entre le point de tension découpée (3) et le point de découpage (S1, S2) de chaque unité de commutation (UC1, UC2), chaque thyristor étant orienté pour faire circuler le courant dans un sens permettant de transférer l'énergie électrique disponible sur ledit point de tension alternatif vers le point de découpage de chaque unité de commutation.

4. Dispositif selon l'une quelconque des revendications 1 à 3, **caractérisé en ce que** les moyens de permutation (23) comprennent une diode (D5, D6) disposée entre le point de tension découpée (3) et le point de découpage (S1, S2) de chaque unité de commutation (UC1, UC2), chaque diode étant orientée pour faire circuler le courant dans un sens permettant de transférer l'énergie électrique disponible sur ledit point de tension alternatif vers le point de découpage de chaque unité de commutation.

5. Dispositif selon la revendication 4, **caractérisé en ce que** les moyens de permutation (23) comprennent, en outre, un transistor (T5, T6) orienté pour conduire le courant dans le sens opposé.

6. Dispositif selon l'une quelconque des revendications 1 à 5, **caractérisé en ce que** le second groupe de commutation (43, 44 ; 91-94) de chaque branche de tension intermédiaire (33, 34 ; 81, 84) et de chaque unité de commutation (UC1, UC2 ; 61) est conçu pour permettre, en outre, la conduction d'un courant dans une direction opposée à la première direction lorsque l'amplitude de la tension sur le point de découpage (S1, S2) de ladite unité de commutation est inférieure à l'amplitude de la tension sur la ligne à laquelle ladite branche est connectée.

7. Dispositif selon l'une quelconque des revendications 1 à 5, caractérisé en ce le second groupe de commutation (43, 44 ; 91-94) de chaque branche de tension intermédiaire (33, 34 ; 81, 84) et de chaque unité de commutation (UC1, UC2 ; 61) comprend :
- un transistor (T8, T9) orienté pour permettre la conduction d'un courant dans la première direction lorsque l'amplitude de la tension sur le point de découpage est supérieure à l'amplitude de la tension sur la ligne à laquelle ladite branche est connectée,
- au moins une diode (D7, D10) montée en série avec ledit transistor et orientée pour laisser passer un courant circulant dans ladite première direction, et
- une diode (D8, D9) montée en parallèle dudit transistor et orientée en inverse par rapport au dit transistor.

8. Dispositif selon la revendication 7, **caractérisé en ce que** le second groupe de commutation (43, 44 ; 91-94) de chaque branche de tension intermédiaire (33, 34 ; 81, 84) et de chaque unité de commutation (UC1, UC2 ; 61) comprend, en outre, un transistor (T7, T10) orienté pour permettre la conduction d'un courant dans la direction opposée à la première direction lorsque l'amplitude de la tension sur le point de découpage est inférieure à l'amplitude de la tension sur la ligne à laquelle ladite branche est connectée.

9. Dispositif selon l'une quelconque des revendications 1 à 8, **caractérisé en ce que** le premier groupe de commutation (41, 42 ; 95) de chaque branche de tension maximum (31, 32) et de chaque unité de commutation (UC1, UC2 ; 61) comprend au moins une diode (D1, D4) orientée pour au moins bloquer le courant dans une seconde direction lorsque l'amplitude de la tension sur le point de découpage de ladite unité de commutation est inférieure à l'amplitude de la tension sur la ligne à laquelle ladite branche est connectée.

10. Dispositif selon la revendication 9, **caractérisé en ce que** le premier groupe de commutation (41, 42 ; 95) de chaque branche de tension maximum (31, 32) et de chaque unité de commutation (UC1, UC2 ; 61) comprend, en outre, un transistor (T1, T4) orienté pour permettre la conduction d'un courant dans une direction opposée à la seconde direction lorsque l'amplitude de la tension sur le point de découpage est inférieure à l'amplitude de la tension sur la ligne à laquelle ladite branche est connectée.

11. Dispositif selon l'une quelconque des revendications 1 à 10, **caractérisé en ce que** le troisième groupe de commutation (45, 46 ; 96) de chaque branche de tension minimum (35, 36) et de chaque unité de commutation (UC1, UC2 ; 61) est conçu pour permettre la conduction d'un courant dans au moins une troisième direction lorsque l'amplitude de la tension sur le point de découpage de ladite unité de commutation est supérieure à l'amplitude de la tension sur la ligne de tension de référence, et pour laisser passer un courant dans une direction opposée à ladite troisième direction, et comprend :
- un transistor (T2, T3) orienté pour permettre la conduction d'un courant dans la troisième direction lorsque l'amplitude de la tension sur le point de découpage de ladite unité de commutation est supérieure à l'amplitude de la tension sur la ligne de tension de référence, et
- une diode (D2, D3) montée en parallèle dudit transistor et orientée pour laisser passer un courant circulant dans une direction opposée à ladite troisième direction.

12. Alimentation sans interruption (101) comprenant une entrée d'alimentation (102) sur laquelle est appliquée une tension d'entrée alternative, un redresseur (103) connecté à ladite entrée, deux lignes de tension sensiblement continue de signes opposés connectées en sortie dudit redresseur, un onduleur (106) connecté aux dites lignes de tension sensiblement continue et comportant une sortie (107) destinée à fournir une tension sécurisée, **caractérisée en ce que** ledit onduleur (106) est un dispositif convertisseur selon l'une quelconque des revendications précédentes et fournit à partir des tensions sensiblement continues une tension sécurisée alternative.

## Patentansprüche

1. Mehrpegelumwandler mindestens zum Umwandeln einer zerhackten Wechselspannung (VA), die an einem Punkt einer zerhackten Spannung (3) verfügbar ist, in mindestens fünf Gleichspannungsniveaus (-U/2, -U/4, REF, U/4, U/2), die auf Gleichspannungsleitungen verfügbar sind, wobei die Leitungen eine Referenzspannungsleitung (5; 70) und ebenso viele Leitungen (6, 7; 71-75) mit positiven Spannungsniveaus wie Leitungen mit negativen Spannungsniveaus (8, 9) aufweisen,
die Vorrichtung weist zwei getrennte Schalteinheiten (UC1, UC2; 61) zum Umwandeln der Alternanzen der positiven beziehungsweise negativen zerhackten Spannung in mindestens zwei Gleichspannungsniveaus, jeweils ein positives und ein negatives, wobei die Schalteinheiten an die Referenzspannungsleitung (5; 70) und die Gleichspannungsleitungen (6-9; 71-75) angeschlossen sind, die jeweils ein positives Spannungsniveau und ein negatives Spannungsniveau aufweisen, und
**dadurch gekennzeichnet, dass** jede Schalteinheit einen Zerhackungspunkt (S1, S2), der über Permutationsmittel (23) an den Punkt der zerhackten Spannung (3) angeschlossen ist, und Schaltgruppen (41-48; 91-96) aufweist, die zwischen den Leitungen, an die die Schalteinheit angeschlossen ist, und dem Zerhackungspunkt angeschlossen sind,
jede Schalteinheit (UC1, UC2) Folgendes aufweist:
- einen Maximalspannungszweig (31, 32), der direkt zwischen dem Zerhackungspunkt (S1, S2) der Schalteinheit und der Gleichspannungsleitung (6, 8; 75) angeschlossen ist, die an die Schalteinheit mit einem Extremspannungsniveau angeschlossen ist, wobei der Maximalspannungszweig mit einer ersten Schaltgruppe (41, 42; 95) versehen ist,
- einen Zwischenspannungszweig (33, 3; 91-94), der direkt zwischen dem Zerhackungspunkt (S1, S2) und der mindestens einen Gleichspannungsleitung (7, 9; 71-74) angeschlossen ist, die an die Schalteinheit mit einem Zwischenspannungsniveau angeschlossen ist, wobei der mindestens eine Zwischenspannungszweig mit einer zweiten Schaltgruppe (43, 44; 91-94) versehen ist, und
- einen Mindestspannungszweig (35, 36), der direkt zwischen dem Zerhackungspunkt (S1, S2) und der Referenzspannungsleitung (5, 70), angeschlossen ist, wobei der Mindestspannungszweig mit einer dritten Schaltgruppe (45, 46; 96) versehen ist,
die Schaltgruppen (41-46; 91-96) von jedem Zweig (31-36; 31, 35, 81-84) mindestens ermöglichen, die elektrische Energie von dem Zerhackungspunkt (S1, S2) zu den Gleichspannungsleitungen (5-9; 70-75) zu übertragen, an die die Zweige angeschlossen sind, um die Spannungsniveaus auf den Leitungen zu regulieren, und
die zweite Schaltgruppe (43, 44; 91-94) von jedem Zwischenspannungszweig (33, 34; 81, 84) und von jeder Schalteinheit (UC1, UC2; 61) konzipiert ist, um das Leiten eines Stroms in mindestens eine erste Richtung zu ermöglichen, wenn die Amplitude der Spannung auf dem Zerhackungspunkt (S1, S2) der Schalteinheit größer als die Amplitude der Spannung auf der Leitung ist, an die der Zweig angeschlossen ist, und um den Strom unabhängig von der Amplitude der Spannung auf dem Zerhackungspunkt zu sperren.

2. Vorrichtung nach Anspruch 1, **dadurch gekennzeichnet, dass** die zweite Schaltgruppe (33, 34; 81-84) die gleiche auf jedem Zwischenspannungszweig einer gleichen Schalteinheit (UC1, UC2; 61) ist.

3. Vorrichtung nach einem der Ansprüche 1 oder 2, **dadurch gekennzeichnet, dass** die Permutationsmittel (23) einen Thyristor (TH5, TH6) aufweisen, der zwischen dem Punkt der zerhackten Spannung (3) und dem Zerhackungspunkt (S1, S2) von jeder Schalteinheit (UC1, UC2) angeordnet ist, wobei jeder Thyristor ausgerichtet ist, um den Strom in eine Richtung fließen zu lassen, die ermöglicht, die elektrische Energie, die auf dem Wechselspannungspunkt verfügbar ist, in Richtung des Zerhackungspunktes von jeder Schalteinheit zu übertragen.

4. Vorrichtung nach einem der Ansprüche 1 bis 3, **dadurch gekennzeichnet, dass** die Permutationsmittel (23) eine Diode (D5, D6) aufweisen, die zwischen dem Punkt der zerhackten Spannung (3) und dem Zerhackungspunkt (S1, S2) von jeder Schalteinheit (UC1, UC2) angeordnet ist, wobei jede Diode ausgerichtet ist, um den Strom in eine Richtung fließen zu lassen, die ermöglicht, die elektrische Energie, die auf dem Wechselspannungspunkt verfügbar ist, in Richtung des Zerhackungspunktes von jeder Schalteinheit zu übertragen.

5. Vorrichtung nach Anspruch 4, **dadurch gekennzeichnet, dass** die Permutationsmittel (23) ferner einen Thyristor (T5, T6) aufweisen, der ausgerichtet ist, um den Strom in die entgegengesetzte Richtung fließen zu lassen.

6. Vorrichtung nach einem der Ansprüche 1 bis 5, **dadurch gekennzeichnet, dass** die zweite Schaltgruppe (43, 44; 91-94) von jedem Zwischenspannungszweig (33, 34; 81, 84) und von jeder Schalteinheit (UC1, UC2; 61) konzipiert ist, um ferner das Leiten eines Stroms in mindestens eine entgegengesetzte Richtung zu der ersten Richtung zu ermöglichen, wenn die Amplitude der Spannung auf dem Zerhackungspunkt (S1, S2) der Schalteinheit niedriger als die Amplitude der Spannung auf der Leitung ist, an die der Zweig angeschlossen ist.

7. Vorrichtung nach einem der Ansprüche 1 bis 5, **dadurch gekennzeichnet, dass** die zweite Schaltgruppe (43, 44; 91-94) von jedem Zwischenspannungszweig (33, 34; 81, 84) und von jeder Schalteinheit (UC1, UC2; 61) Folgendes aufweist:
- einen Transistor (T8, T9), der ausgerichtet ist, um das Leiten eines Stroms in die erste Richtung zu ermöglichen, wenn die Amplitude der Spannung auf dem Zerhackungspunkt größer als die Amplitude der Spannung auf der Leitung ist, an die der Zweig angeschlossen ist,
- mindestens eine Diode (D7, D10), die mit dem Transistor in Reihe geschaltet ist und ausgerichtet ist, um einen Strom, der in die erste Richtung fließt, durchzulassen, und
- eine Diode (D8, D9), die mit dem Transistor parallel geschaltet ist und in Bezug auf den Transistor umgekehrt ausgerichtet ist.

8. Vorrichtung nach Anspruch 7, **dadurch gekennzeichnet, dass** die zweite Schaltgruppe (43, 44; 91-94) von jedem Zwischenspannungszweig (33, 34; 81, 84) und von jeder Schalteinheit (UC1, UC2; 61) ferner einen Transistor (T7, T10) aufweist, der ausgerichtet ist, um das Leiten eines Stroms in die entgegengesetzte Richtung zu der ersten Richtung zu ermöglichen, wenn die Amplitude der Spannung auf dem Zerhackungspunkt niedriger als die Amplitude der Spannung auf der Leitung ist, an die der Zweig angeschlossen ist.

9. Vorrichtung nach einem der Ansprüche 1 bis 8, **dadurch gekennzeichnet, dass** die erste Schaltgruppe (41, 42; 94) von jedem Maximalspannungszweig (31, 32) und von jeder Schalteinheit (UC1, UC2; 61) mindestens eine Diode (D1, D4) aufweist, die ausgerichtet ist, um mindestens den Strom in eine zweite Richtung zu sperren, wenn die Amplitude der Spannung auf dem Zerhackungspunkt der Schalteinheit niedriger als die Amplitude der Spannung auf der Leitung ist, an die der Zweig angeschlossen ist.

10. Vorrichtung nach Anspruch 9, **dadurch gekennzeichnet, dass** die erste Schaltgruppe (41, 42; 95) von jedem Maximalspannungszweig (31, 32) und von jeder Schalteinheit (UC1, UC2; 61) ferner einen Transistor (T1, T4) aufweist, der ausgerichtet ist, um das Leiten eines Stroms in eine entgegengesetzte Richtung zu der zweiten Richtung zu ermöglichen, wenn die Amplitude der Spannung auf dem Zerhackungspunkt niedriger als die Amplitude der Spannung auf der Leitung ist, an die der Zweig angeschlossen ist.

11. Vorrichtung nach einem der Ansprüche 1 bis 10, **dadurch gekennzeichnet, dass** die dritte Schaltgruppe (45, 46; 96) von jedem Mindestspannungszweig (35, 36) und von jeder Schalteinheit (UC1, UC2; 61) konzipiert ist, um das Leiten eines Stroms in mindestens eine dritte Richtung zu ermöglichen, wenn die Amplitude der Spannung auf dem Zerhackungspunkt der Schalteinheit höher als die Amplitude der Spannung auf der Referenzspannungsleitung ist, und um einen Strom in eine entgegengesetzte Richtung zu der dritten Richtung durchzulassen, und Folgendes aufweist:
- einen Transistor (T2, T3), der ausgerichtet ist, um das Leiten eines Stroms in die dritte Richtung zu ermöglichen, wenn die Amplitude der Spannung auf dem Zerhackungspunkt höher als die Amplitude der Spannung auf der Referenzspannungsleitung ist, und
- eine Diode (D2, D3), die mit dem Transistor parallel geschaltet ist und ausgerichtet ist, um einen Strom, der in eine entgegengesetzte Richtung zu der dritten Richtung fließt, durchzulassen.

12. Unterbrechungsfreie Stromversorgung (101), umfassend einen Stromversorgungseingang (102), an den eine Eingangswechselspannung angelegt ist, einen Gleichrichter (103), der an den Eingang angeschlossen ist, zwei Leitungen von einer Spannung, die im Wesentlichen eine Gleichspannung ist, mit entgegengesetzten Vorzeichen, die am Ausgang des Gleichrichters angeschlossen sind, einen Wechselrichter (106), der an die Leitungen von einer Spannung, die im Wesentlichen eine Gleichspannung ist, angeschlossen ist und einen Ausgang (107) aufweist, der dazu bestimmt ist, eine gesicherte Spannung bereitzustellen, **dadurch gekennzeichnet, dass** der Wechselrichter (106) ein Umwandler nach einem der vorhergehenden Ansprüche ist und ausgehend von den Spannungen, die im Wesentlichen Gleichspannungen sind, eine gesicherte Wechselspannung bereitstellt.

## Claims

1. Multi-level converter device for at least converting a chopped AC voltage (VA) available at a chopped voltage point (3) into at least five DC voltage levels (-U/2, -U/4, REF, U/4, U/2) available on DC voltage lines, said lines including a reference voltage line (5; 70) and as many lines (6, 7; 71-75) having positive voltage levels as there are lines having negative voltage levels (8, 9),
said device comprises two separate switching units (UC1, UC2; 61) for converting alternations in said respectively positive and negative chopped voltage into at least two respectively positive and negative DC voltage levels, said switching units being connected to said reference voltage line (5; 70) and to the DC voltage lines (6-9; 71-75) having a positive voltage level and a negative voltage level, respectively, and **characterized in that** each switching unit comprises a chopping point (S1, S2) connected to said chopped voltage point (3) by way of permutating means (23), and switching groups (41-48; 91-96) connected between said lines to which said switching unit is connected and said chopping point,
each switching unit (UC1, UC2) comprises:
- a maximum voltage branch (31, 32) connected directly between the chopping point (S1, S2) of said switching unit and the DC voltage line (6, 8; 75) connected to said switching unit having an extreme voltage level, said maximum voltage branch being provided with a first switching group (41, 42; 95),
- at least one intermediate voltage branch (33, 34, 91-94) connected directly between said chopping point (S1, S2) and the at least one DC voltage line (7, 9; 71-74) connected to said switching unit having an intermediate voltage level, said at least one intermediate voltage branch being provided with a second switching group (43, 44; 91-94), and
- a minimum voltage branch (35, 36) connected directly between said chopping point (S1, S2) and the reference voltage line (5, 70), said minimum voltage branch being provided with a third switching group (45, 46; 96),
said switching groups (41-46; 91-96) of each branch (31-36; 31, 35, 81-84) enable at least electrical energy to be transferred from the chopping point (S1, S2) to the DC voltage lines (5-9; 70-75) to which said branches are connected in order to regulate the voltage levels on said lines, and
said second switching group (43, 44; 91-94) of each intermediate voltage branch (33, 34; 81, 84) and of each switching unit (UC1, UC2; 61) is designed to enable a current to be conducted in at least a first direction when the amplitude of the voltage on the chopping point (S1, S2) of said switching unit is greater than the amplitude of the voltage on the line to which said branch is connected, and to block said current regardless of the amplitude of the voltage on the chopping point.

2. Device according to Claim 1, **characterized in that** the second switching group (33, 34; 81-84) is the same on each intermediate voltage branch of one and the same switching unit (UC1, UC2; 61).

3. Device according to either of Claims 1 and 2, **characterized in that** the permutating means (23) comprise a thyristor (TH5, TH6) positioned between the chopped voltage point (3) and the chopping point (S1, S2) of each switching unit (UC1, UC2), each thyristor being oriented so as to enable current to flow in a direction that enables the electrical energy available on said AC voltage point to be transferred to the chopping point of each switching unit.

4. Device according to any one of Claims 1 to 3, **characterized in that** the permutating means (23) comprise a diode (D5, D6) positioned between the chopped voltage point (3) and the chopping point (S1, S2) of each switching unit (UC1, UC2), each diode being oriented so as to enable current to flow in a direction that enables the electrical energy available on said AC voltage point to be transferred to the chopping point of each switching unit.

5. Device according to Claim 4, **characterized in that** the permutating means (23) furthermore comprise a transistor (T5, T6) oriented so as to conduct current in the opposite direction.

6. Device according to any one of Claims 1 to 5, **characterized in that** the second switching group (43, 44; 91-94) of each intermediate voltage branch (33, 34; 81, 84) and of each switching unit (UC1, UC2; 61) is designed to furthermore enable a current to be conducted in a direction opposite to the first direction when the amplitude of the voltage on the chopping point (S1, S2) of said switching unit is smaller than the amplitude of the voltage on the line to which said branch is connected.

7. Device according to any one of Claims 1 to 5, **characterized in that** the second switching group (43, 44; 91-94) of each intermediate voltage branch (33, 34; 81, 84) and of each switching unit (UC1, UC2; 61) comprises:
- a transistor (T8, T9) oriented so as to enable a current to be conducted in the first direction when the amplitude of the voltage on the chopping point is greater than the amplitude of the voltage on the line to which said branch is connected,
- at least one diode (D7, D10) connected in series with said transistor and oriented so as to pass a current flowing in said first direction, and
- a diode (D8, D9) connected in parallel with said transistor and oriented in the opposite direction to said transistor.

8. Device according to Claim 7, **characterized in that** the second switching group (43, 44; 91-94) of each intermediate voltage branch (33, 34; 81, 84) and of each switching unit (UC1, UC2; 61) furthermore comprises a transistor (T7, T10) oriented so as to enable a current to be conducted in the direction opposite to the first direction when the amplitude of the voltage on the chopping point is smaller than the amplitude of the voltage on the line to which said branch is connected.

9. Device according to any one of Claims 1 to 8, **characterized in that** the first switching group (41, 42; 95) of each maximum voltage branch (31, 32) and of each switching unit (UC1, UC2; 61) comprises at least one diode (D1, D4) oriented so as to at least block current in a second direction when the amplitude of the voltage on the chopping point of said switching unit is smaller than the amplitude of the voltage on the line to which said branch is connected.

10. Device according to Claim 9, **characterized in that** the first switching group (41, 42; 95) of each maximum voltage branch (31, 32) and of each switching unit (UC1, UC2; 61) furthermore comprises a transistor (T1, T4) oriented so as to enable a current to be conducted in a direction opposite to the second direction when the amplitude of the voltage on the chopping point is smaller than the amplitude of the voltage on the line to which said branch is connected.

11. Device according to any one of Claims 1 to 10, **characterized in that** the third switching group (45, 46; 96) of each minimum voltage branch (35, 36) and of each switching unit (UC1, UC2; 61) is designed to enable a current to be conducted in at least one third direction when the amplitude of the voltage on the chopping point of said switching unit is greater than the amplitude of the voltage on the reference voltage line, and to pass a current in a direction opposite to said third direction, and comprises:
- a transistor (T2, T3) oriented so as to enable a current to be conducted in the third direction when the amplitude of the voltage on the chopping point of said switching unit is greater than the amplitude of the voltage on the reference voltage line, and
- a diode (D2, D3) connected in parallel with said transistor and oriented so as to pass a current flowing in a direction opposite to said third direction.

12. Uninterruptible power supply (101) comprising a power supply input (102) to which an AC input voltage is applied, a rectifier (103) connected to said input, two substantially DC voltage lines with opposite signs and connected at the output of said rectifier, an inverter (106) connected to said substantially DC voltage lines and having an output (107) intended to supply a secure voltage, **characterized in that** said inverter (106) is a converter device according to any one of the preceding claims and supplies a secure AC voltage on the basis of the substantially DC voltages.
